# EUROPÄISCHE PATENTSCHRIFT

(11) **EP 3 314 361 B1**
(45) Veröffentlichungstag und Bekanntmachung des Hinweises auf die Patenterteilung: **26.06.2019**
(21) Anmeldenummer: 16738050.0
(22) Anmeldetag: 10.05.2016
(51) Int. Cl.: G06F 1/26, G06F 1/32, G06F 13/40

(54) **NETZTEIL ZUR ENERGIEVERSORGUNG EINES DIGITALEN DRAHTGEBUNDENEN INFORMATIONSBUSSYSTEMS**
POWER SUPPLY FOR SUPPLYING POWER TO A WIRED DIGITAL INFORMATION BUS SYSTEM
BLOC D'ALIMENTATION DE FOURNITURE D'ÉNERGIE À UN SYSTÈME DE BUS FILAIRE NUMÉRIQUE D'INFORMATIONS

(30) Priorität: 29.06.2015 AT 505652015
(43) Veröffentlichungstag der Anmeldung: 02.05.2018
(73) Patentinhaber: Lunatone Industrielle Elektronik GmbH, 1220 Wien (AT)
(72) Erfinder: MAIR, Alexander, 2285 Breitstetten (AT)
(74) Vertreter: Patentanwaltskanzlei Matschnig & Forsthuber OG
(86) Internationale Anmeldenummer: PCT/AT2016/050136
(87) Internationale Veröffentlichungsnummer: WO 2017/000004

(56) Entgegenhaltungen:
- EP-A1- 2 816 487
- DE-A1- 19 813 922
- US-A- 5 559 502
- US-A1- 2013 320 769

## Beschreibung

Die Erfindung betrifft ein Netzteil zur Energieversorgung eines digitalen drahtgebundenen Informationsbussystems über einen Spannungsausgang, wobei das Netzteil aufweist:
- einen mit einer ersten Spannung versorgten ersten Spannungseingang und
- eine zwischen dem ersten Spannungseingang und dem Spannungsausgang geschaltete Strombegrenzungsschaltung.

Aus dem Stand der Technik sind drahtgebundene Bussysteme bekannt geworden, die zur Informationsverteilung zwischen verschiedenen Busteilnehmern dienen, bei denen der Bus über eine Spannungsquelle mit einer definierten Spannung versorgt wird, wobei eine zwischen Spannungsquelle und den Teilnehmern geschaltete Strombegrenzungsschaltung dafür sorgt, dass ein Kurzschließen des Busses nur zu begrenzt hohen Strömen führt. Die einzelnen Teilnehmer kommunizieren miteinander, indem diese den Bus gezielt, beispielsweise innerhalb den Teilnehmern zugeordneten Zeitintervallen, kurzschließen können, wodurch das Spannungsniveau des Busses von einem ersten Niveau hin zu einem zweiten niedrigeren Spannungsniveau abfällt. Den Spannungsniveaus ist jeweils entweder der Zustand "low" oder "high" zugeordnet, wobei die einzelnen Teilnehmer die Abfolge dieser Zustände mit Hilfe einer Kodierung als digitale Information abbilden/ erfassen können. Die Spannungsdifferenz zwischen dem ersten und dem zweiten Spannungsniveau fällt zu einem großen Teil an der Strombegrenzungsschaltung ab, in welcher elektrische Energie entsprechend dem Produkt aus Spannung, Strom und Zeitdauer an der Strombegrenzungsschaltung in thermische Energie in Form von Verlustwärme umgewandelt wird.

Die Verlustwärme führt zu einer thermischen Belastung der Strombegrenzungsschaltung und begrenzt zudem die elektrische Effizienz des Netzteils sowie eines durch das Netzteil versorgten Bussystems. Dokument US 5559502 A zeigt ein Buskommunikationssystem, in dem Spannungsniveaus mittels Zu- oder Wegschaltung eines elektrischen Widerständen beeinflusst werden können.

Eine Aufgabe der Erfindung besteht daher darin, ein Netzteil zu schaffen, welches diese Nachteile einfach ohne große Mehrkosten behebt. Diese Aufgabe wird mit einem Netzteil der eingangs genannten Art gelöst, welches erfindungsgemäß eine Steuerschaltung zur Steuerung eines zwischen dem ersten Spannungseingang und der Strombegrenzungsschaltung angeordneten ersten Schaltelements zum schaltbaren Verbinden des ersten Spannungseingangs mit der Strombegrenzungsschaltung und einen mit einer zweiten Spannung versorgten zweiten Spannungseingang aufweist, wobei die Steuerschaltung dazu eingerichtet ist, die Spannung am Spannungsausgang zu erfassen und bei Unterschreiten eines festlegbaren ersten Schwellwertes die Verbindung des ersten Spannungseingangs mit der Strombegrenzungsschaltung durch Ansteuerung des ersten Schaltelements zu trennen und bei Überschreiten eines zweiten Schwellwertes wiederherzustellen, wobei der zweite Spannungseingang dazu eingerichtet ist, während der Zeitdauer des Trennens durch das erste Schaltelement die Strombegrenzungsschaltung mit der zweiten Spannung zu versorgen, wobei die zweite Spannung niedriger als die erste Spannung ist. Durch Ersetzen der ersten Spannung durch eine niedrigere zweite Spannung kann während der Zeitdauer, in der ein Teilnehmer zum Signalisieren des Zustands "low" den Bus (bzw. die Signalleitung des Busses) kurzschließt, die in der Strombegrenzungsschaltung umgesetzte Verlustleistung deutlich reduziert werden. Außerdem kann, wenn gewünscht, auch der Kurzschlussstrom verringert werden, wodurch die Verluste an sämtlichen im Stromkreis befindlichen ohmschen Widerständen gemäß dem Zusammenhang I²R gesenkt werden können.

Das Erfassen der Spannung am Spannungsausgang durch die Steuerschaltung kann durch eine direkte oder indirekte Messung (z.B. durch Strommessung) erfolgen. Der Begriff "Netzteil" ist im Sinne der vorliegenden Erfindung nicht auf eine innerhalb eines Gehäuses angeordnete elektrische Schaltung beschränkt, sondern betrifft ganz allgemein eine Energieversorgungseinrichtung, die auch durchaus modular aufgebaut sein kann. Relativangaben bezüglich einzelner elektrischer Bauteile, Schaltungen oder Komponenten wie zum Beispiel "zwischen dem Bauteil A und dem Punkt B" beziehen sich, sofern nicht anders angegeben, nicht auf eine räumliche Anordnung sondern auf die im jeweiligen Kontext beschriebene Schaltungstopologie.

Der zweite Spannungseingang ermöglicht es, während der Zeitdauer des Trennens durch das erste Schaltelement die Strombegrenzungsschaltung zur Aufrechterhaltung einer minimalen Versorgungsspannung mit der zweiten Spannung zu versorgen. Diese minimale Versorgungsspannung erlaubt es, dass das Spannungsniveau des Bussystems nach Beendigung eines jeweiligen Kurzschlusses wieder über den zweiten Schwellwert hinaus ansteigt, so dass die Steuerschaltung den Wechsel auf den Zustand "high" erkennt, und dem ersten Spannungseingang wieder hin zu der Strombegrenzungsschaltung durchschaltet und den Bus mit der höheren ersten Spannung versorgt. Die erste Spannung kann zum Beispiel zur effizienten Energieversorgung der einzelnen Busteilnehmer eingesetzt werden.

Ein Informationsbussystem, wie zum Beispiel der digitale Lichtbus "DALI", im Sinne der vorliegenden Erfindung umfasst sowohl einen Kommunikationsbus als auch Busteilnehmer.

Besonders günstig kann es sein, wenn zwischen dem ersten Schaltelement und der Strombegrenzungsschaltung ein Einspeisepunkt liegt, und der zweite Spannungseingang mit dem Einspeisepunkt über eine hin zu dem Einspeisepunkt durchlässigen und in Gegenrichtung sperrenden elektrischen Komponente oder Schaltung verbunden ist. Damit können Energieflüsse von dem Einspeisepunkt hin zu dem Spannungseingang in einfacher Weise vermieden werden.

In einer besonders einfachen Variante der Erfindung kann vorgesehen sein, dass die sperrende Komponente eine Diode ist.

Alternativ dazu könnte ebenso vorgesehen sein, dass die sperrende Komponente ein invers zu dem ersten Schaltelement geschaltetes zweites Schaltelement ist, wobei das erste und das zweite Schaltelement vorzugsweise Transistorschalter sind.

Um eine besonders einfache Implementierung der Erfindung zu erreichen, kann es vorgesehen sein, dass der erste und der zweite Schwellwert gleich groß sind. Damit können die beiden Schwellwerte durch einen einzigen Schwellwert ersetzt werden. Dabei kann es besonders günstig sein, wenn die Steuerschaltung einen Spannungskomparator umfasst, der zum Vergleich des Spannungsausgangs mit dem Schwellwert eingerichtet ist.

Alternativ dazu ist es auch möglich, voneinander abweichende Schwellwerte festzulegen.

Insbesondere kann vorgesehen sein, dass die zweite Spannung so bemessen ist, dass an dem Einspeisepunkt zumindest jene Mindestspannung anliegt, die dem unteren Grenzwert einer Busspannung eines dem Netzteil zugeordneten digitalen Informationsbussystems entspricht, dem der logische Buszustand "high" zugeordnet ist. Zudem kann vorgesehen sein, dass die zweite Spannung zumindest 5%, vorzugsweise zumindest 20% höher ist als die Mindestspannung.

Besonders günstig kann es sein, wenn die zweite Spannung maximal 70% der ersten Spannung, vorzugsweise maximal 50%, besonders bevorzugt maximal 30% der ersten Spannung beträgt. Je niedriger die zweite Spannung gewählt wird, desto mehr Energie kann eingespart werden, wobei weiterhin die Funktion des Busses sichergestellt sein muss.

Insbesondere kann vorgesehen sein, dass das Netzteil einen Transformator aufweist, wobei die erste und die zweite Spannung durch eine oder zwei Sekundärwicklungen des Transformators zur Verfügung gestellt sind. Sofern die erste und die zweite Spannung von einer gemeinsamen Sekundärwicklung zur Verfügung gestellt werden sollen, könnte die erste Spannung an den Enden der gemeinsamen Sekundärwicklungen und die zweite Spannung an einer zwischen den Enden liegenden Abzapfung abgegriffen werden. Alternativ dazu kann die erste und die zweite Spannung über jeweils eine eigene Sekundärwicklung zur Verfügung gestellt werden.

Insbesondere kann vorgesehen sein, dass das Netzteil einen Tiefsetzsteller aufweist, wobei die zweite Spannung aus der ersten Spannung mit Hilfe des Tiefsetzstellers ausgebildet ist.

Alternativ dazu kann vorgesehen sein, dass das Netzteil einen Hochsetzsteller aufweist, wobei die erste Spannung aus der zweiten Spannung mit Hilfe des Hochsetzstellers ausgebildet ist.

Zur Stabilisierung der jeweiligen Spannung kann vorgesehen sein, dass das Netzteil einen Energiespeicher, vorzugsweise einen Akku oder einen Superkondensator, aufweist, durch den die erste Spannung und/oder die zweite Spannung gestützt ist.

Um in einem Fehlerfall, aufgrund dessen der Bus für eine längere Zeitdauer kurzgeschlossen ist, die Verluste in der Strombegrenzungsschaltung sowie in anderen beteiligten Komponenten zu begrenzen, kann es günstig sein, wenn die Steuerschaltung dazu eingerichtet ist, - die Zeitdauer zu erfassen, in der der Spannungsausgang den ersten Schwellwert durchgängig unterschreitet, - die Zeitdauer mit einen Grenzwert zu vergleichen und - bei Überschreiten des Grenzwertes eine Trennung oder Abschaltung der zweiten Spannung zu veranlassen, wobei der Grenzwert zwischen 10 und 5000 ms beträgt.

Insbesondere sollte es vorgesehen sein, dass der Spannungsausgang frei von zu dem Spannungsausgang parallel geschalteten Kondensatoren ist, also keine parallel geschalteten Kondensatoren aufweist. Eine verschwindend geringe Ausgangskapazität ist wünschenswert. Anderenfalls würde der Strom Ib nur bedingt durch die Strombegrenzungsschaltung limitiert werden können, wodurch die Busteilnehmer höhere Kurzschlussströme übertragen müssten und zudem die Dynamik des Bussystems verschlechtert werden könnte.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines Netzteils gemäß dem Stand der Technik,
Figur 2 eine schematische Darstellung einer Ausführungsform eines erfindungsgemäßen Netzteils,
Figur 3 eine Darstellung eines Informationsbussystems und
Figur 4 eine beispielhafte Darstellung eines zeitlichen Verlaufs des Spannungsniveaus und Stromverlaufs der Signalleitung eines durch das erfindungsgemäße Netzteil versorgten Informationsbussystems.

In den folgenden Figuren bezeichnen, sofern nicht anders angegeben, gleiche Bezugszeichen gleiche Merkmale.

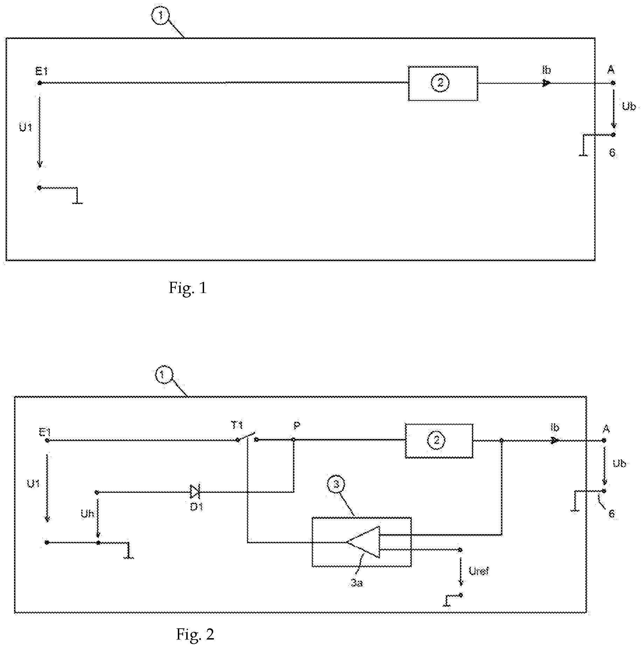

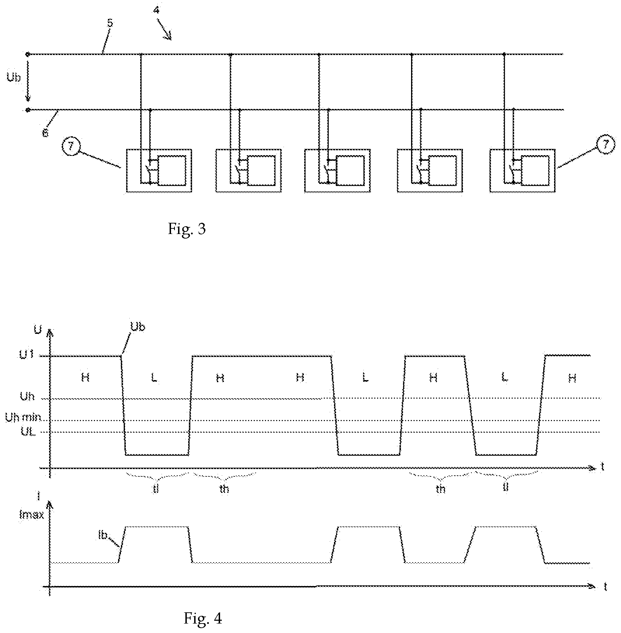

Figur 1 zeigt eine schematische Darstellung eines Netzteils 1 gemäß dem Stand der Technik. Das Netzteil 1 weist einen ersten Spannungseingang E1 auf, der mit einer ersten Spannung U1 versorgt ist. Das Netzteil 1 weist zudem einen Spannungsausgang A bzw. eine daran anliegende Ausgangsspannung Ub auf, mit welcher beispielsweise das in Figur 3 gezeigte digitale Informationsbussystem 4, aufweisend eine Signalleitung 5, eine Masseleitung 6 und mehrere zwischen die Signalleitung 5 und die Masseleitung 6 geschaltete Busteilnehmer 7, versorgt wird. Die Ausgangsspannung Ub liegt an der Signalleitung 5 an und wird deshalb auch im Folgenden als Busspannung bezeichnet. Die Teilnehmer 7 sind dazu eingerichtet, Informationen auszutauschen, indem diese die Signalleitung 5 mit der Masseleitung 6 (bzw. einer anderen gemeinsamen Bezugsleitung) verbinden oder von dieser trennen, sodass das Spannungsniveau der Ausgangsspannung Ub zwischen zwei Zuständen wechselt. Die Teilnehmer 7 können die Ausgangsspannung Ub überwachen und bei Unterschreiten eines gewissen Spannungslevels UL ein L-Bit (low-Bit) und bei Überschreiten eines Spannungslevels Uh,min ein H-Bit (high-Bit; abhängig von der Kodierung können diesen Bitzuständen die Signale "logisch null" und "logisch eins" zugeordnet werden) registrieren.

Um den in Figur 1 dargestellten Strom Ib zu begrenzen, weisen Netzteile gemäß dem Stand der Technik eine Strombegrenzungsschaltung 2 auf, welche im einfachsten Fall aus einen ohmschen Widerstand besteht. Jeder Busteilnehmer 7 kann durch sequenzielles Kurzschließen des Busses den anderen Teilnehmern 7 Informationen übermitteln. Die Busteilnehmer 7 können dazu eingerichtet sein, während des Sendens einer Information diese auch selbst einzulesen und so eine eventuell vorliegende Störung zu erkennen und die Ausgabe zu einem anderen Zeitpunkt zu wiederholen.

Die Strombegrenzung 2 sorgt dafür, dass die Busteilnehmer 7 bei ihrer Datenübermittlung nur einen definierten Strom kurzschließen müssen. In diesem Zusammenhang darf im Gegensatz zu anderen üblichen Stromversorgungen kein Kondensator am Spannungsausgang A vorhanden sein, so dass zu keinem Zeitpunkt ein höherer Strom als der von der Strombegrenzungsschaltung 2 zur Verfügung gestellte an der Signalleitung 5 fließen kann.

Figur 2 zeigt eine schematische Darstellung einer Ausführungsform eines erfindungsgemäßen Netzteils 1 zur Energieversorgung des digitalen Informationsbussystems 4 über einen Spannungsausgang A, bzw. eine daran anliegende Ausgangsspannung Ub, wobei das Netzteil 1 aufweist:
- Einen mit einer ersten Spannung U1 versorgten ersten Spannungseingang E1 und
- eine zwischen dem ersten Spannungseingang E1 und dem Spannungsausgang Ub geschaltete Strombegrenzungsschaltung 2. Im Gegensatz zu den Netzteilen gemäß dem Stand der Technik weist das erfindungsgemäße Netzteil 1 ferner eine Steuerschaltung 3 zur Steuerung eines zwischen dem ersten Spannungseingang E1 und der Strombegrenzungsschaltung 2 angeordneten ersten Schaltelements T1 zum schaltbaren Verbinden des ersten Spannungseingangs E1 mit der Strombegrenzungsschaltung 2 und einen mit einer zweiten Spannung Uh versorgten zweiten Spannungseingang E2 auf, wobei die Steuerschaltung 3 dazu eingerichtet ist, die Spannung am Spannungsausgang Ub zu erfassen und bei Unterschreiten eines festlegbaren ersten Schwellwertes Us1 (z.B. Us1 =< Uh,min) die Verbindung des Spannungseingangs E1 mit der Strombegrenzungsschaltung 2 durch Ansteuerung des ersten Schaltelements T1 zu trennen und bei Überschreiten eines zweiten Schwellwertes Us2 (z.B. Us2 >= Uh,min) wiederherzustellen. Der zweite Spannungseingang E2 ist dazu eingerichtet, während der Zeitdauer des Trennens durch das erste Schaltelement T1 die Strombegrenzungsschaltung 2 mit der zweiten Spannung Uh zu versorgen, wobei die zweite Spannung U1 niedriger als die erste Spannung Uh ist. Dadurch wird die Busspannung während der Zeitdauer eines L-bits abgesenkt und die an der Strombegrenzungsschaltung 2 umgesetzte Verlustleistung reduziert.

Zwischen dem ersten Schaltelement T1 und der Strombegrenzungsschaltung 2 liegt ein Einspeisepunkt P, an welchem zumindest die Mindestspannung Uh,min anliegt, ab der ein H-bit registriert werden kann. Dies ist sinnvoll, da eine Beendigung eines Kurzschlusses durch einen Teilnehmer 7 den Busstrom Ib reduziert, sodass die Mindestspannung Uh,min an dem Spannungsausgang A anliegt und den Wechsel von einem L-bit auf ein H-bit signalisiert, was durch die Steuerschaltung 3 erfasst wird, die im Anschluss die erste Spannung U1 über das erste Schaltelement T1 mit der Strombegrenzungsschaltung 2 verbindet.

Der zweite Spannungseingang E2 ist in dem gezeigten Ausführungsbeispiel mit dem Einspeisepunkt P über eine hin zu dem Einspeisepunkt P durchlässigen und in Gegenrichtung sperrenden Diode D1 (im allgemeinen können beliebige dem Fachmann bekannte elektrische Komponente oder Schaltungen eingesetzt werden) verbunden, die einen Energierückfluss von dem Einspeisepunkt P hin zu dem zweiten Spannungseingang E2 verhindert.

Die Steuerschaltung 3 umfasst in der gezeigten Ausführungsform einen Spannungskomparator 3a, der zum Vergleich des Spannungsausgangs A bzw. der Ausgangsspannung Ub mit einem Schwellwert Uref eingerichtet ist und ergebnisabhängig davon das Schaltelement T1 öffnet oder schließt, wobei im gezeigten Ausführungsbeispiel gilt: Uref = Us1 = Us2
Figur 4 zeigt eine beispielhafte Darstellung eines zeitlichen Verlaufs des Spannungsniveaus und des Stromverlaufs in der Signalleitung 5 eines durch das erfindungsgemäße Netzteil 1 versorgten Informationsbussystems 4. Darin sind Grenzwerte für die bereits diskutierten Spannungsniveaus UL und Uh,min dargestellt, wobei das Spannungsniveau der zweiten Spannung Uh ausreichend von dem Mindestniveau Uh,min beabstandet ist.

In den L-Phasen (also jene Zeitdauer, innerhalb der an dem Bus ein L-bit anliegt; kurzgeschlossener Bus) liegt die erste Spannung U1 nicht mehr an den Busteilnehmern 3 an, sondern fällt an der Strombegrenzungsschaltung 2 ab. Bei einem sehr aktiven Bus, der durch ein herkömmliches Netzteil versorgt ist, wird daher ein großer Teil der zu Verfügung gestellten Leistung in der Strombegrenzung 2 in Wärme umgesetzt.

Diese Verlustenergie pro Bit kann mit der Formel Ib x Ub x tb berechnet werden.

Durch das erfindungsgemäße Netzteil 1 kann während jeder L-Phase mit Hilfe des Schalters T1 die Spannung U1 von der Strombegrenzungsschaltung 2 getrennt und durch die zweite Spannung Uh ersetzt werden.

Beträgt Uh zum Beispiel nur ein Drittel von U1, verringert sich somit auch die Verlustleistung in der Strombegrenzungsschaltung 2 um zumindest ein Drittel der sonst anfallenden Verluste. Um im Fehlerfall, in welchem die Signalleitung 5 dauerhaft kurzgeschlossen ist, die Energieverluste des Netzteiles 1 und des Informationsbussystems 4 zu minimieren, kann vorgesehen sein, dass die Steuerschaltung 3 dazu eingerichtet ist,
- die Zeitdauer zu erfassen, in der der Spannungsausgang Ub den ersten Schwellwert Us1 durchgängig unterschreitet,
- die Zeitdauer mit einen Grenzwert zu vergleichen und
- bei Überschreiten des Grenzwertes eine Trennung oder Abschaltung der zweiten Spannung Uh von dem Einspeisepunkt P zu veranlassen,
wobei der Grenzwert zwischen 10 und 5000 ms beträgt.

In Anbetracht dieser Lehre ist der Fachmann in der Lage, ohne erfinderisches Zutun zu anderen, nicht gezeigten Ausführungsformen der Erfindung zu gelangen. Die Erfindung ist daher nicht auf die gezeigte Ausführungsform beschränkt. Auch können einzelne Aspekte der Erfindung bzw. der Ausführungsform aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben. Die vorliegende Erfindung wird daher durch den unabhängigen Anspruch definiert. Weitere Aspekte der Erfindung werden in den abhängigen Ansprüche genannt. Beschriebene Ausführungsarten, die nicht in den Schutzumfang der Ansprüche fallen, sind nicht Teil der beanspruchten Erfindung.

## Patentansprüche

1. Netzteil (1) zur Energieversorgung eines digitalen Informationsbussystems (4) über einen Spannungsausgang (A), wobei das Netzteil (1) aufweist:
- einen mit einer ersten Spannung (U1) versorgten ersten Spannungseingang (E1) und
- eine zwischen dem ersten Spannungseingang (E1) und dem Spannungsausgang (A) geschaltete Strombegrenzungsschaltung (2),
**gekennzeichnet durch**
- eine Steuerschaltung (3) zur Steuerung eines zwischen dem ersten Spannungseingang (E1) und der Strombegrenzungsschaltung (2) angeordneten ersten Schaltelements (T1) zum schaltbaren Verbinden des ersten Spannungseingangs (E1) mit der Strombegrenzungsschaltung (2) und
- einen mit einer zweiten Spannung (Uh) versorgten zweiten Spannungseingang (E2),
wobei die Steuerschaltung (3) dazu eingerichtet ist, die Ausgangsspannung (Ub) am Spannungsausgang (A) zu erfassen und bei Unterschreiten eines festlegbaren ersten Schwellwertes Us1 die Verbindung des ersten Spannungseingangs (E1) mit der Strombegrenzungsschaltung (2) durch Ansteuerung des ersten Schaltelements (T1) zu trennen und bei Überschreiten eines zweiten Schwellwertes Us2 wiederherzustellen,
wobei der zweite Spannungseingang (E2) dazu eingerichtet ist, während der Zeitdauer des Trennens durch das erste Schaltelement (T1) die Strombegrenzungsschaltung (2) mit der zweiten Spannung (Uh) zu versorgen, wobei die zweite Spannung (Uh) niedriger als die erste Spannung (U1) ist.

2. Netzteil (1) nach Anspruch 1, **dadurch gekennzeichnet, dass** zwischen dem ersten Schaltelement (T1) und der Strombegrenzungsschaltung (2) ein Einspeisepunkt (P) liegt, und der zweite Spannungseingang (E2) mit dem Einspeisepunkt (P) über eine hin zu dem Einspeisepunkt (P) durchlässige und in Gegenrichtung sperrende elektrische Komponente oder Schaltung verbunden ist.

3. Netzteil (1) nach Anspruch 2, **dadurch gekennzeichnet, dass** die sperrende Komponente eine Diode (D1) ist.

4. Netzteil (1) nach Anspruch 2, **dadurch gekennzeichnet, dass** die sperrende Komponente ein invers zu dem ersten Schaltelement (T1) geschaltetes zweites Schaltelement ist, wobei das erste und das zweite Schaltelement vorzugsweise Transistorschalter sind.

5. Netzteil (1) nach einem der Ansprüche 1 bis 4, **dadurch gekennzeichnet, dass** der erste und der zweite Schwellwert Us1 und Us2 gleich groß sind.

6. Netzteil (1) nach Anspruch 5, **dadurch gekennzeichnet, dass** Steuerschaltung (3) einen Spannungskomparator (3a) umfasst, der zum Vergleich des Spannungsausgangs (Ub) mit einem Schwellwert (Uref) eingerichtet ist, wobei der Schwellenwert (Uref) gleich groß ist wie der erste beziehungsweise der zweite Schwellenwert Us1 und Us2.

7. Netzteil (1) nach Anspruch 6, **dadurch gekennzeichnet, dass** die zweite Spannung (Uh) so bemessen ist, dass an dem Einspeisepunkt (P) zumindest jene Mindestspannung (Uh,min) anliegt, die dem unteren Grenzwert einer Busspannung eines dem Netzteil (1) zugeordneten digitalen Informationsbussystems (4) entspricht, dem der logische Buszustand "high" zugeordnet ist.

8. Netzteil (1) nach Anspruch 7, **dadurch gekennzeichnet, dass** die zweite Spannung (Uh) zumindest 5%, vorzugsweise zumindest 20% höher ist als die Mindestspannung (Uh,min).

9. Netzteil (1) nach einem der Ansprüche 1 bis 8, **dadurch gekennzeichnet, dass** die zweite Spannung (Uh) maximal 70% der ersten Spannung (U1), vorzugsweise maximal 50%, besonders bevorzugt maximal 30% der ersten Spannung (U1) beträgt.

10. Netzteil (1) nach einem der Ansprüche 1 bis 9, **dadurch gekennzeichnet, dass** das Netzteil (1) einen Transformator aufweist, wobei die erste und die zweite Spannung (U1, Uh) durch eine oder zwei Sekundärwicklungen des Transformators zur Verfügung gestellt sind.

11. Netzteil (1) nach einem der Ansprüche 1 bis 9, **dadurch gekennzeichnet, dass** das Netzteil (1) einen Tiefsetzsteller aufweist, wobei die zweite Spannung (Uh) aus der ersten Spannung (U1) mit Hilfe des Tiefsetzstellers ausgebildet ist.

12. Netzteil (1) nach einem der Ansprüche 1 bis 9, **dadurch gekennzeichnet, dass** das Netzteil (1) einen Hochsetzsteller aufweist, wobei die erste Spannung (U1) aus der zweiten Spannung (Uh) mit Hilfe des Hochsetzstellers ausgebildet ist.

13. Netzteil (1) nach einem der Ansprüche 1 bis 12, **dadurch gekennzeichnet, dass** das Netzteil (1) einen Energiespeicher, vorzugsweise einen Akku oder einen Superkondensator, aufweist, durch den die erste Spannung (U1) und/oder die zweite Spannung (U2) gestützt ist.

14. Netzteil (1) nach einem der Ansprüche 1 bis 14, **dadurch gekennzeichnet, dass** die Steuerschaltung (3) dazu eingerichtet ist,
- die Zeitdauer zu erfassen, in der der Spannungsausgang (Ub) den ersten Schwellwert Us1 durchgängig unterschreitet,
- die Zeitdauer mit einen Grenzwert zu vergleichen und
- bei Überschreiten des Grenzwertes eine Trennung oder Abschaltung der zweiten Spannung (Uh) zu veranlassen,
wobei der Grenzwert zwischen 10 und 5000 ms beträgt.

15. Netzteil (1) nach einem der Ansprüche 1 bis 14, **dadurch gekennzeichnet, dass** der Spannungsausgang (A, Ub) frei von zu dem Spannungsausgang (A, Ub) parallel geschalteten Kondensatoren ist.

## Claims

1. A power supply unit (1) for supplying energy to a digital information bus system (4) via a voltage output (A), wherein the power supply unit (1) comprises:
- a first voltage input (E1) to which a first voltage (U1) is supplied and
- a current limiting circuit (2) connected between the first voltage input (E1) and the voltage output (A),
**characterised by**
- a control circuit (3) for controlling a first switching element (T1) arranged between the first voltage input (E1) and the current limiting circuit (2) for switchably connecting the first voltage input (E1) to the current limiting circuit (2) and
- a second voltage input (E2), to which a second voltage (Uh) is supplied,
wherein the control circuit (3) is configured to record the output voltage (Ub) at the voltage output (A) and, if a determinable first threshold value Us1 is not reached, to interrupt the connection of the first voltage input (E1) to the current limiting circuit (2) by controlling the first switching element (T1), and to re-establish it if a second threshold value Us2 is exceeded,
wherein the second voltage input (E2) is configured to supply the second voltage (Uh) to the current limiting circuit (2) during the duration of interruption by the first switching element (T1), wherein the second voltage (Uh) is lower than the first voltage (U1).

2. The power supply unit (1) according to claim 1, **characterised in that** a feed-in point (P) lies between the first switching element (T1) and the current limiting circuit (2), and the second voltage input (E2) is connected to the feed-in point (P) via an electrical component or circuit, which is permeable in direction of the feed-in point (P) and isolating in the opposite direction.

3. The power supply unit (1) according to claim 2, **characterised in that** the locking component is a diode (D1).

4. The power supply unit (1) according to claim 2, **characterised in that** the isolating component is a second switching element connected inversely to the first switching element (T1), wherein the first and the second switching elements are preferably transistor switches.

5. The power supply unit (1) according to one of claims 1 to 4, **characterised in that** the first and the second threshold values Us1 and Us2 are the same size.

6. The power supply unit (1) according to claim 5, **characterised in that** the control circuit (3) comprises a voltage comparator (3a), which is configured to compare the voltage output (Ub) with a threshold value (Uref), wherein the threshold value (Uref) is the same size as the first threshold value Us1 / the second threshold value / Us2.

7. The power supply unit (1) according to claim 6, **characterised in that** the second voltage (Uh) is rated such that the minimum voltage (Uh, min) present at the feed-in point (P) is at least the voltage which corresponds to the lower threshold value of a bus voltage of a digital information bus system (4) assigned to the power supply unit (1), which has the logical bus state "high" assigned to it.

8. The power supply unit (1) according to claim 7, **characterised in that** the second voltage (Uh) is at least 5 %, preferably at least 20 % higher than the minimum voltage (Uh, min).

9. The power supply unit (1) according to one of claims 1 to 8, **characterised in that** the second voltage (Uh) amounts to max. 70 % of the first voltage (U1), preferably max. 50 %, especially preferably max. 30 % of the first voltage (U1).

10. The power supply unit (1) according to one of claims 1 to 9, **characterised in that** the power supply unit (1) comprises a transformer, wherein the first and the second voltage (U1, Uh) are being made available by one or two secondary windings of the transformer.

11. The power supply unit (1) according to one of claims 1 to 9, **characterised in that** the power supply unit (1) comprises a buck convertor, wherein the second voltage (Uh) is formed from the first voltage (U1) with the aid of the buck converter.

12. The power supply unit (1) according to one of claims 1 to 9, **characterised in that** the power supply unit (1) comprises a boost converter, wherein the first voltage (U1) is formed from the second voltage (Uh) with the aid of the boost converter.

13. The power supply unit (1) according to one of claims 1 to 12, **characterised in that** the power supply unit (1) comprises an energy store, preferably a battery or a super capacitor, by which the first voltage (U1) and/or the second voltage (U2) is supported.

14. The power supply unit (1) according to one of claims 1 to 14, **characterised in that** the control circuit (3) is configured
- to record the time duration, in which the voltage output (Ub) continuously drops below the first threshold value Us1,
- to compare the time duration to a limit value and
- to initiate an interruption or switch-off of the second voltage (Uh) when the limit value is exceeded,
- wherein the limit value is between 10 and 5000 ms.

15. The power supply unit (1) according to one of claims 1 to 14, **characterised in that** the voltage output (A, Ub) is free from capacitors switched in parallel to the voltage output (A, Ub).

## Revendications

1. Partie de réseau (1) pour l'alimentation en énergie d'un système de bus d'information numérique (4) par le biais d'une sortie de tension (A), sachant que la partie de réseau (1) comporte :
- une première entrée de tension (E1) alimentée avec une première tension (U1), et
- un circuit de limitation de courant (2) connecté entre la première entrée de tension (E1) et la sortie de tension (A),
**caractérisée par**
- un circuit de commande (3) pour commander un premier élément de connexion (T1) disposé entre la première entrée de tension (E1) et le circuit de limitation de courant (2) pour la liaison connectable de la première entrée de tension (E1) au circuit de limitation de courant (2), et
- une deuxième entrée de tension (E2) alimentée par une deuxième tension (Uh),
sachant que le circuit de commande (3) est agencé pour saisir la tension de sortie (Ub) à la sortie de tension (A) et pour séparer, lors d'un dépassement d'une première valeur seuil Us1 déterminable, la liaison de la première entrée de tension (E1) avec le circuit de limitation de courant (2) en activant le premier élément de connexion (T1) et la rétablir lors d'un dépassement d'une deuxième valeur seuil Us2,
sachant que la deuxième entrée de tension (E2) est agencée pour alimenter le circuit de limitation de courant (2) avec la deuxième tension (Uh) pendant la période de temps de la séparation par le premier élément de connexion (T1), sachant que la deuxième tension (Uh) est plus faible que la première tension (U1).

2. Partie de réseau (1) selon la revendication 1, **caractérisée en ce qu'**un point d'alimentation (P) est situé entre le premier élément de connexion (T1) et le circuit de limitation de courant (2) et la deuxième entrée de tension (E2) est reliée au point d'alimentation (P) par un composant ou un circuit électrique perméable vers le point d'alimentation (1) et bloquant en sens inverse.

3. Partie de réseau (1) selon la revendication 2, **caractérisée en ce que** le composant bloquant est une diode (D1).

4. Partie de réseau (1) selon la revendication 2, **caractérisée en ce que** le composant bloquant est un deuxième élément de connexion connecté inversement au premier élément de connexion (T1), sachant que le premier et le deuxième élément de connexion sont de préférence des commutateurs à transistor.

5. Partie de réseau (1) selon l'une quelconque des revendications 1 à 4, **caractérisée en ce que** la première et la deuxième valeur seuil Us1 et Us2 sont de même grandeur.

6. Partie de réseau (1) selon la revendication 5, **caractérisée en ce que** le circuit de commande (3) comprend un comparateur de tension (3a), qui est agencé pour la comparaison de la sortie de tension (Ub) à une valeur seuil (Uref), sachant que la valeur seuil (Uref) est de même grandeur que la première ou la deuxième valeur seuil Us1 et Us2.

7. Partie de réseau (1) selon la revendication 6, **caractérisée en ce que** la deuxième tension (Uh) est dimensionnée de telle sorte qu'au moins cette tension minimale (Uh, min) est présente au point d'alimentation (P), qui correspond à la valeur limite inférieure d'une tension de bus d'un système de bus d'information (4) numérique attribué à la partie de réseau (1) à laquelle est attribué l'état de bus logique « élevé ».

8. Partie de réseau (1) selon la revendication 7, **caractérisée en ce que** la deuxième tension (Uh) est au moins de 5 %, de préférence au moins de 20 % plus élevée que la tension minimale (Uh, min) .

9. Partie de réseau (1) selon l'une quelconque des revendications 1 à 8, **caractérisée en ce que** la deuxième tension (Uh) est au maximum 70 % de la première tension (U1), de préférence au maximum 50 %, particulièrement de préférence au maximum 30 % de la première tension (U1).

10. Partie de réseau (1) selon l'une quelconque des revendications 1 à 9, **caractérisée en ce que** la partie de réseau (1) comporte un transformateur, sachant que la première et la deuxième tension (U1, Uh) sont mises à disposition par un ou deux enroulements secondaires du transformateur.

11. Partie de réseau (1) selon l'une quelconque des revendications 1 à 9, **caractérisée en ce que** la partie de réseau (1) comporte un convertisseur abaisseur, sachant que la deuxième tension (Uh) est constituée à partir de la première tension (U1) à l'aide du convertisseur abaisseur.

12. Partie de réseau (1) selon l'une quelconque des revendications 1 à 9, **caractérisée en ce que** la partie de réseau (1) comporte un convertisseur élévateur, sachant que la première tension (U1) est constituée de la deuxième tension (Uh) à l'aide du convertisseur élévateur.

13. Partie de réseau (1) selon l'une quelconque des revendications 1 à 12, **caractérisée en ce que** la partie de réseau (1) comporte un accumulateur d'énergie, de préférence une batterie ou un supercondensateur, par lequel la première tension (U1) et/ou la deuxième tension (U2) est soutenue.

14. Partie de réseau (1) selon l'une quelconque des revendications 1 à 14, **caractérisée en ce que** le circuit de commande (3) est agencé
- pour saisir la période de temps dans laquelle la sortie de tension (Ub) dépasse constamment la première valeur seuil Us1,
- pour comparer la période de temps à une valeur limite,
- pour provoquer une séparation ou déconnexion de la deuxième tension (Uh) lors du dépassement de la valeur limite,
sachant que la valeur limite se situe entre 10 et 5000 ms.

15. Partie de réseau (1) selon l'une quelconque des revendications 1 à 14, **caractérisée en ce que** la sortie de tension (A, Ub) est dépourvue de condensateurs parallèlement connectés à la sortie de tension (A, Ub).
